## Europäisches Patentamt
## European Patent Office
## Office européen des brevets

(19)

(11) Veröffentlichungsnummer: **0 023 695**
**B1**

(12)

# EUROPÄISCHE PATENTSCHRIFT

(45) Veröffentlichungstag der Patentschrift:
**20.07.83**

(51) Int. Cl.³: **H 04 M 19/08**

(21) Anmeldenummer: **80104434.8**

(22) Anmeldetag: **28.07.80**

(54) Schaltungsanordnung zum Überwachen einer Eingangsspannung.

(30) Priorität: **02.08.79 DE 2931436**

(43) Veröffentlichungstag der Anmeldung:
**11.02.81 Patentblatt 81/6**

(45) Bekanntmachung des Hinweises auf die Patenterteilung:
**20.07.83 Patentblatt 83/29**

(84) Benannte Vertragsstaaten:
**AT BE CH FR GB IT LI LU NL SE**

(56) Entgegenhaltungen:
**EP-A-0 023 682**
**DE-A-2 536 200**
**DE-A-2 813 580**
**FR-A-2 357 122**

(73) Patentinhaber: **SIEMENS AKTIENGESELLSCHAFT,
Berlin und München Wittelsbacherplatz 2,
D-8000 München 2 (DE)**

(72) Erfinder: **Sailer, Heinrich, Dipl.-Ing.,
Michlbauerstrasse 3, D-8021 Neuried (DE)**
Erfinder: **Vogeler, Torsten, Dipl.-Ing., Wiener Strasse 6,
D-8023 Pullach (DE)**

Schaltungsanordnung zum Überwachen einer Eingangsspannung

Die Erfindung bezieht sich auf eine Schaltungsanordnung zur Überwachung einer Eingangsspannung, bei der aus der Eingangsspannung eine in einem Energiespeicher gepufferte Betriebsspannung für eine mindestens teilweise aus digitalen Schaltkreisen aufgebaute Steuerschaltung erzeugt wird und bei der die Eingangsspannung einem Fühler zugeführt wird, mit dem ein Zeitglied verbunden ist und der ein Meldesignal abgibt, wenn die Eingangsspannung kleiner ist als ein vorgegebener Schwellenwert.

Bei der Versorgung einer mindestens teilweise aus digitalen Schaltkreisen aufgebauten Steuerschaltung mit einer Versorgungsspannung ist es allgemein bekannt, diese unter Verwendung einer Regelstufe aus einer Eingangsspannung zu erzeugen. Die Regelstufe kann beispielsweise als Parallelregelstufe oder als Serienregelstufe ausgebildet sein. Üblicherweise enthält die Regelstufe auch einen Kondensator als Energiespeicher, an dem die Betriebsspannung für die Steuerschaltung abgegeben wird. Falls die Eingangsspannung kurzzeitig einen vorgegebenen Schwellenwert unterschreitet oder kurzzeitig unterbrochen wird, wird für diese Zeitdauer die für den Betrieb der Steuerschaltung erforderliche Energie dem Kondensator entnommen. Falls die Eingangsspannung über eine längere Zeit den Schwellenwert unterschreitet oder über eine längere Zeit unterbrochen wird, kann der Kondensator so weit entladen werden, dass die Betriebsspannung ihren kleinsten zugelassenen Wert unterschreitet. In diesem Fall können in der Steuerschaltung undefinierte Zustände eingestellt werden, die die Erzeugung von unerwünschten Signalen zur Folge haben können.

Ein Beispiel für eine derartige Steuerschaltung ist ein Modem für eine Übertragung von Daten auf einer Fernsprechleitung. Falls der Modem aus dem Schleifenstrom der Fernsprechleitung gespeist wird, muss seine Funktion auch dann gewährleistet sein, wenn der Schleifenstrom kurzzeitig unterbrochen wird. Der Modem muss beispielsweise betriebsbereit bleiben, wenn während der Wahl eines fernen Teilnehmers bei der Erzeugung der Wählimpulse der Schleifenstrom für eine erste Zeitdauer von beispielsweise 60 ms unterbrochen wird. Weiterhin muss der Modem bereits begonnene Funktionen ohne zusätzliche Prozeduren fortsetzen können, wenn Unterbrechungen des Schleifenstroms auftreten, die grösser sind als eine zweite Zeitdauer von beispielsweise einer Sekunde. Falls die Unterbrechungen grösser sind als die zweite Zeitdauer, müssen undefinierte Zustände im Modem vermieden werden.

Es wäre denkbar, einen verhältnismässig grossen Energiespeicher vorzusehen, der die Versorgung der Steuerschaltung auch bei längeren Unterbrechungen der Eingangsspannung übernimmt. Dies würde einerseits einen grossen Aufwand erfordern und bei einer Entladung des Energiespeichers infolge einer Unterbrechung der Eingangsspannung über eine längere Zeitdauer das Auftreten von unerwünschten Zuständen in der Steuerschaltung nicht vermeiden. Andererseits könnte die Aufladung des Energiespeichers zu lange dauern.

Es ist nun zwar aus der DE-A-2 536 200 auch schon eine Schaltungsanordnung zur Überwachung einer Sprechader auf Unterbrechung der Speisespannung in Fernsprechapparaten mit einem Wahlsender mit Spannungsspeicher bekannt, wobei von einem zwischen den Sprechadern angeordneten Spannungsteiler die Basisspannung für einen Transistor abgenommen wird, dessen Emitter mit der zu überwachenden Sprechdauer und dessen Kollektor mit der anderen Sprechader verbunden ist. In der nicht überwachten Sprechader ist dabei ein einen Rückstrom vom Spannungsspeicher sperrender Richtleiter vorgesehen. Aus dem Schaltzustand des Transistors wird bei der betreffenden bekannten Schaltungsanordnung ein Überwachungssignal abgeleitet. Zwischen der Basis und dem Kollektor des Transistors ist ein gesonderter Kondensator angeschlossen, der mit seiner Ladung kurzzeitige Unterbrechungen der Speisespannung zu überbrücken gestattet. Mit Hilfe dieser bekannten Schaltungsanordnung gelingt es jedoch nicht ohne weiteres, die Forderungen zu erfüllen, die vorstehend aufgezeigt worden sind.

Der Erfindung liegt daher die Aufgabe zugrunde, eine Schaltungsanordnung der eingangs genannten Art so weiterzubilden, dass einerseits kein grosser Energiespeicher benötigt wird und dass andererseits undefinierte Zustände in der Steuerschaltung vermieden werden können, wenn die Eingangsspannung über eine längere Zeitspanne unterbrochen ist.

Gelöst wird die vorstehend aufgezeigte Aufgabe bei einer Schaltungsanordnung der eingangs genannten Art erfindungsgemäss dadurch, dass das Zeitglied durch eine erste Zeitstufe und durch eine zweite Zeitstufe gebildet ist, dass die erste Zeitstufe auf die Aufnahme des Meldesignals hin an die Steuerschaltung ein Signal abgibt, welches in dieser einen Ruhezustand einstellt, bei dem besonders wenig Energie benötigt wird, wenn die Dauer des Meldesignals grösser ist als eine vorgegebene erste Zeitdauer, und den die Steuerschaltung nach Verschwinden des genannten einen Signals selbst wieder verlässt und die vor der Einstellung in den Ruhezustand begonnenen Funktionen fortsetzt, und dass die zweite Zeitstufe die Betriebsspannung abschaltet, wenn die Dauer des Meldesignals grösser ist als eine vorgegebene zweite, die erste Zeitdauer überschreitende Zeitdauer.

Die Erfindung bringt den Vorteil mit sich, dass sie einen geringeren Aufwand erfordert und weitgehend als integrierter Schaltkreis kostengünstig aufgebaut werden kann. Als Energiespeicher kann ein verhältnismässig kleiner Kondensator benutzt werden, da ihm nur während der ersten kurzen Zeitdauer die volle Energie für den Betrieb der Steuerschaltung entnommen wird und da ihm während des Ruhezustandes der Steuerschaltung nur wenig Energie entnommen wird. Durch das Abschalten der Betriebsspannung nach der zweiten Zeitdauer wird die Erzeugung von unerwünschten Signalen vermieden. Wenn die Eingangsspannung nach der Unterbrechung wieder vorhanden ist, sind keine zusätzlichen Prozeduren erforderlich, da die gleichen Prozeduren wie beim erstmaligen Einschalten der Steuerschaltung verwendet werden können.

Die Verwendung einer weiteren Spannungsquelle ist nicht erforderlich, wenn als Versorgungsspannung für den Fühler die Eingangsspannung und als Versorgungsspannung für die Zeitstufen die Betriebsspannung verwendet wird.

Die in der zweiten Zeitstufe einzustellende Zeitdauer kann auf einfache Weise um den Betrag der ersten Zeitdauer vermindert werden, wenn die zweite Zeitstufe der ersten Zeitstufe nachgeschaltet ist. Es wäre auch denkbar, die beiden Zeitstufen durch das Meldesignal parallel anzusteuern.

Die Verwendung einer eigenen Schaltstufe, für das Abschalten der Betriebsspannung ist nicht erforderlich, wenn die zweite Zeitstufe einen Schalter enthält, der die Betriebsspannung kurzschliesst.

Falls die zweite Zeitstufe der ersten Zeitstufe nachgeschaltet ist, ist es von Vorteil, wenn die erste Zeitstufe einen Schalter enthält, der einen Pol der Betriebsspannung zur zweiten Zeitstufe durchschaltet.

Die Schaltungsanordnung erfordert insbesondere dann einen geringen Aufwand, wenn die Zeitstufen als integrierte, monostabile Kippstufen ausgebildet sind.

Eine weitgehende Unabhängigkeit von Bauelementetoleranzen und Temperaturabhängigkeit von zeitbestimmenden Bauelementen wird vermieden, wenn die Zeitstufen als digitale Schaltkreise ausgebildet sind.

Um die Schaltungsanordnung unabhängig von der Polarität der Eingangsspannung betreiben zu können, ist es günstig, wenn der Fühler aus einem Zweiggleichrichter und einer nachgeschalteten Schwellwertstufe gebildet wird, die das Meldesignal erzeugt.

Im folgenden wird ein mit den erfindungsgemässen Merkmalen ausgestattetes Ausführungsbeispiel anhand von Zeichnungen erläutert.

Es zeigen:

Fig. 1 ein Blockschaltbild der Schaltungsanordnung,

Fig. 2 Zeitdiagramme der Eingangsspannung und der Betriebsspannung,

Fig. 3 ein Schaltbild der Schaltungsanordnung.

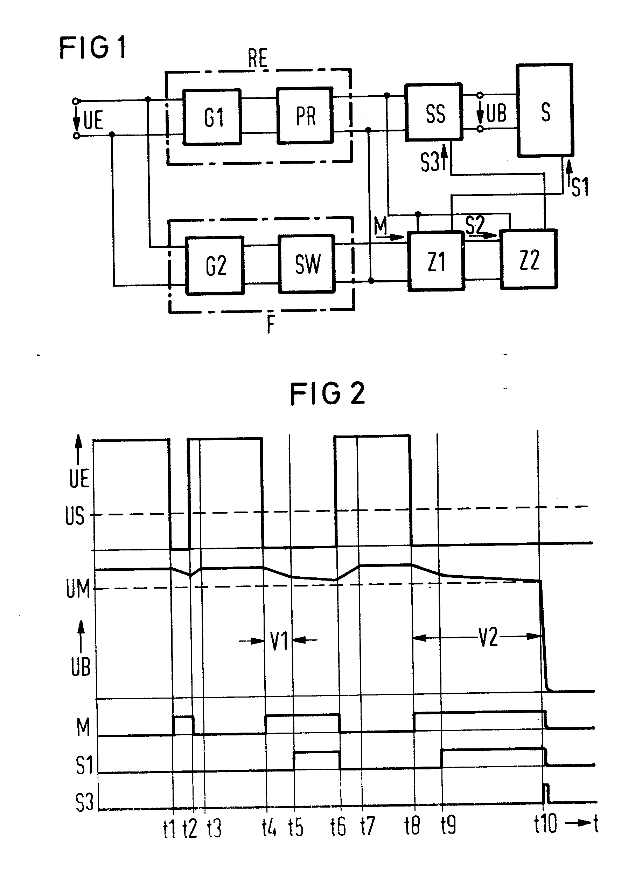

Bei der in Fig. 1 dargestellten Schaltungsanordnung erzeugt eine Regelschaltung RE aus einer Eingangsspannung UE, vorzugsweise einer Gleichspannung, eine konstante Betriebsspannung UB für eine mindestens teilweise aus digitalen Schaltkreisen gebildete Steuerschaltung S. Ein Fühler F überwacht die Eingangsspannung UE und erzeugt ein Meldesignal M, wenn der Momentanwert der Eingangsspannung UE kleiner ist als eine vorgegebene Schwellenspannung US. Das Meldesignal M wird einer ersten Zeitstufe Z1 zugeführt, die ein Signal S1 an die Steuerschaltung S abgibt, wenn die Dauer des Meldesignals M eine vorgegebene erste Zeitdauer überschreitet. Ein dem Signal S1 entsprechendes Signal S2 wird einer zweiten Zeitstufe Z2 zugeführt, die ein Signal S3 an eine Schaltstufe SS abgibt, mit dem in der Schaltstufe SS die Betriebsspannung UB abgeschaltet wird, wenn die Dauer des Meldesignals M eine vorgegebene zweite Zeitdauer überschreitet.

Das Abschalten der Betriebsspannung UB erfolgt in der Schaltstufe SS durch Unterbrechung oder durch Kurzschluss.

Die Regelstufe RE enthält einen Zweiggleichrichter G1, der eine Gleichspannung einer Polarität, unabhängig von der Polarität der Eingangsspannung UE erzeugt. Dem Gleichrichter G1 ist ein Parallelregler PR nachgeschaltet, der an seinem Ausgang eine der Betriebsspannung UB zugeordnete konstante Ausgangsspannung abgibt. Der Parallelregler enthält einen Energiespeicher, vorzugsweise einen Kondensator, an dessen Anschlüssen die Ausgangsspannung abgegeben wird. Der Fühler F enthält ebenfalls einen Zweiweggleichrichter G2, um unabhängig von der Polarität der Eingangsspannung UE eine Spannung nur einer Polarität zu erzeugen. Dem Gleichrichter G2 ist eine Schwellwertstufe SW nachgeschaltet, die immer dann das Meldesignal M abgibt, wenn die Eingangsspannung UE kleiner ist als die Schwellenspannung US. Weitere Einzelheiten werden im folgenden zusammen mit den in Fig. 2 dargestellten Zeitdiagrammen beschrieben.

Bei den in Fig. 2 dargestellten Zeitdiagrammen sind in Abszissenrichtung die Zeit t und in Ordinatenrichtung die Momentanwerte der Eingangsspannung UE und der Betriebsspannung UB dargestellt.

Es wird angenommen, dass bis zum Zeitpunkt t1 der Wert der Eingangsspannung UE gleich ihrem Sollwert ist. Am Ausgang der Regelstufe RE wird damit eine Betriebsspannung UB abgegeben, die durch den Parallelregler PR auf einen konstanten Nennwert geregelt wird. Zum Zeitpunkt t1 wird angenommen, dass die Eingangsspannung UE kurzzeitig unter einen Schwellenwert US absinkt oder unterbrochen wird. Der Fühler F erzeugt damit das Meldesignal M. Da die Steuerschaltung S weiterhin mit Energie versorgt wird, wird mit der Entladung des Kondensators im Parallelregler PR begonnen. Die Betriebsspannung UB sinkt damit ab. Zum Zeitpunkt t2 ist die Unterbrechung der Eingangsspannung beendet und das Meldesignal M wird beendet. Der Kondensator wird wieder aufgeladen, so dass die Betriebsspannung UB zum Zeitpunkt t3 wieder ihren Sollwert erreicht. Da infolge der kurzen Unterbrechung der Kondensator nur wenig entladen wurde, blieb die Betriebsspannung UB immer über einem für die Funktion der Steuerschaltung S erforderlichen minimalen Wert UM. Das Zeitglied Z1 wurde zwar ausgelöst, es erzeugte jedoch kein Signal S1, da die Dauer des Meldesignals M kleiner war als eine Zeitdauer V1.

Zum Zeitpunkt t4 wird wieder eine Unterbrechung der Eingangsspannung UE angenommen, so dass erneut das Meldesignal M erzeugt wird. Wieder wird die Energie zum Betrieb der Steuerschaltung S dem Kondensator entnommen, so dass dieser entladen wird. Auch wird wieder das Zeitglied Z1 ausgelöst und es erzeugt nach der Verzögerungsdauer V1 zum Zeitpunkt t5 das Signal S1. Das Signal S1 stellt in der Steuerschaltung S einen Ruhezustand ein, in dem diese möglichst wenig Energie verbraucht. Dieser Ruhezustand kann beispielsweise empirisch ermittelt werden oder entsprechend den Angaben der Hersteller der verwendeten Bauelemente berechnet werden. Beispielsweise kann ein Oszillator abgeschaltet werden oder in einem Mikroprozessor ein Wartezustand eingestellt werden, in dem ein bestimmter augenblicklicher Zustand festgehalten wird. Durch die Einstellung des Ruhezustands in der Steuerschaltung S wird dem Kondensator weniger Ladung entnommen, so dass seine Entladekurve einen flacheren Verlauf hat.

Zum Zeitpunkt t6 ist die Unterbrechung der Eingangsspannung UE beendet. Damit werden auch das Meldesignal M und das Signal S1 beendet. In der Steuerschaltung S wird wieder der Normalzustand eingestellt und die vor der Einstellung des Ruhezustands begonnenen Funktionen werden fortgesetzt. Zum Zeitpunkt t7 ist der Kondensator wieder vollständig aufgeladen und die Betriebsspannung nimmt wieder ihren Sollwert an. Auch zwischen den Zeitpunkten t4 und t6 wurde der Minimalwert UM der Betriebsspannung UB nicht unterschritten.

Zum Zeitpunkt t8 wird angenommen, dass die Unterbrechung der Eingangsspannung UE längere Zeit andauert. In ähnlicher Weise wie nach dem Zeitpunkt t4 wird ein Meldesignal M erzeugt, der Kondensator entladen, ein Signal S1 erzeugt und der Ruhezustand in der Steuerschaltung S eingestellt. Da die Dauer der Unterbrechung und damit die Dauer des Meldesignals M grösser ist als eine Zeitdauer V2, erzeugt die Zeitstufe Z2 zum Zeitpunkt t10 ein Signal S3, das die Betriebsspannung UB abschaltet. Zwischen den Anschlüssen der Betriebsspannung UB kann beispielsweise in der Schaltstufe SS ein als Schalter arbeitender Transistor vorgesehen sein, der durch das Signal S3 leitend gesteuert wird. Durch das vollständige Abschalten der Betriebsspannung UB wird ein undefinierter Zustand in der Steuerschaltung S vermieden. Beim erneuten Einschalten der Steuerschaltung S werden dann die gleichen Prozeduren durchgeführt, wie bei der Inbetriebnahme durch Einschalten der Eingangsspannung UE.

Auch zwischen den Zeitpunkten t8 und t10 wurde der Minimalwert UM der Betriebsspannung UB nicht unterschritten, so dass bis zum Zeitpunkt t10 bei einem erneuten Auftreten der Eingangsspannung UE die Funktion der Steuerschaltung S wieder hätte fortgesetzt werden können.

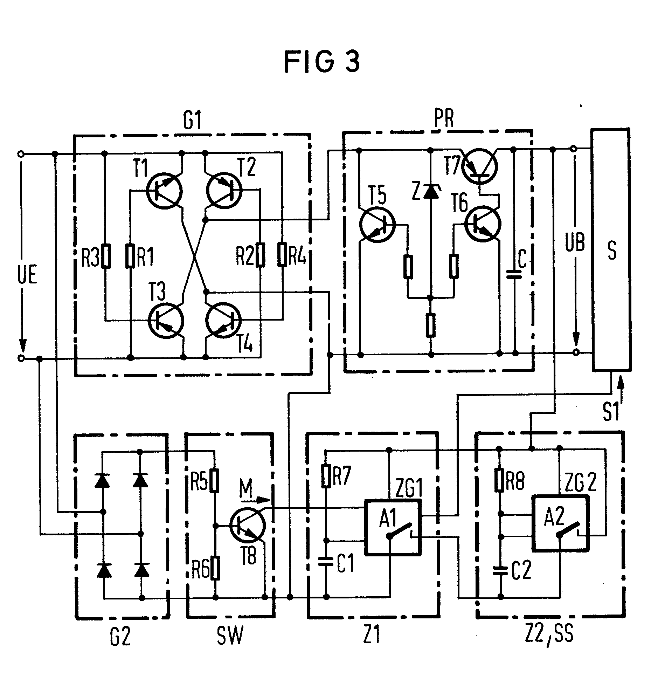

Das in Fig. 3 dargestellte Ausführungsbeispiel der Schaltungsanordnung kann beispielsweise in einem Modem für die Übertragung von Daten über Fernsprechleitungen verwendet werden, der aus dem Schleifenstrom der Fernsprechleitung gespeist wird. Die Eingangsspannung UE kann in diesem Fall während der Wahl eines fernen Teilnehmers durch Öffnen eines nsi-Kontaktes jeweils für eine Zeit von 60 ms unterbrochen werden. Zur Überbrückung dieser Zeitdauer wird die Zeitdauer V1 beispielsweise auf einen Wert von 100 ms eingestellt. Weiterhin kann die Eingangsspannung von der Vermittlungsanlage für eine Zeitdauer von etwa einer Sekunde unterbrochen werden, ohne dass der Modem neu eingeschaltet werden darf. Zu diesem Zweck wird die Zeitdauer V2 auf einen Wert von ca. 1 s eingestellt. Falls die Unterbrechung grösser ist als diese Zeitdauer, wird ein Fehlerfall angenommen und der Modem wird vollständig abgeschaltet.

Die Gleichrichter G1 und G2 sind als Zweiweggleichrichter ausgebildet, um eine einwandfreie Funktion auch bei einer Vertauschung der Polarität der Eingangsspannung UE zu gewährleisten. Beim Gleichrichter G1 sind als Gleichrichterelemente Transistoren T1 bis T4 vorgesehen, die durch Widerstände R1 bis R4 wechselweise leitend gesteuert werden. Beim Gleichrichter G2 sind als Gleichrichterelemente in bekannter Weise vier Dioden vorgesehen. Der Parallelregler — der in der EP-A-23 682 näher beschrieben ist — PR enthält einen Transistor T5, an dem eine der Betriebsspannung UB zugeordnete Spannung anliegt und der immer dann leitend gesteuert wird, wenn diese Spannung grösser ist als eine durch eine Zenerdiode Z festgelegte Spannung. Auf diese Weise wird die Betriebsspannung UB auf einen konstanten Wert geregelt. Gleichzeitig mit dem Transistor T5 wird auch ein Transistor T6 leitend gesteuert, der seinerseits einen Transistor T7 leitend steuert und damit die vom Gleichrichter G1 abgegebene Spannung als Betriebsspannung UB zu einem als Energiespeicher dienenden Kondensator C und zur Steuerschaltung S durchschaltet. Wenn die am Transistor T5 anliegende Spannung kleiner ist als die durch die Zenerdiode Z vorgegebene Spannung, werden die Transistoren T5 bis T7 gesperrt und ein Entladen des Kondensators C durch den Parallelregelkreis PR selbst wird verhindert.

Die Schwellwertstufe SW enthält einen Transistor T8, dessen Basis mit dem Mittelabgriff eines aus den Widerständen R5 und R6 gebildeten Spannungsteilers verbunden ist, an dem die gleichgerichtete Eingangsspannung UE anliegt. Wenn die vom Gleichrichter G2 abgegebene Spannung grösser ist als ein vorgegebener Sollwert US, ist der Transistor T8 leitend und der Wert des Meldesignals M ist gleich dem Bezugspotential. Wenn die Spannung unter den Schwellenwert US sinkt, wird der Transistor T8 gesperrt und das Meldesignal M nimmt den Binärwert 1 an.

Die Zeitstufe Z1 ist in bekannter Weise als monostabile Kippstufe ausgebildet und enthält ein Zeitglied ZG1, das als integrierter Schaltkreis ausgebildet ist und beispielsweise unter der Bezeichnung ICM 7555 von der Firma Intersil im Handel bezogen werden kann. Die Zeitdauer V1 wird durch einen Widerstand R7 und durch einen Kondensator C1 festgelegt. Wenn das Meldesignal M auftritt, wird die Aufladung des Kondensators C1 freigegeben. Sobald die Spannung am Kondensator C1 einen vorgegebenen Schwellenwert überschreitet, gibt das Zeitglied ZG1 das Signal S1 ab, das in der Steuerschaltung S den Ruhezustand einstellt.

Wenn das Meldesignal M vor Ablauf der Zeitdauer V1 beendet wird, wird der Kondensator C1 durch den Transistor T8 wieder entladen und der Schwellenwert wird überschritten, so dass auch kein Signal S1 abgegeben wird. In entsprechender Weise wird im Zeitglied ZG2 der Schalter A2 nicht geschlossen, wenn das Meldesignal M vor Ablauf der Zeitdauer V2 beendet wird.

Die Zeitstufe Z2 ist in ähnlicher Weise aufgebaut und enthält ebenfalls ein Zeitglied ZG2, das dem Zeitglied ZG1 entspricht. Die Zeitstufe Z2 kann ebenfalls durch das Meldesignal M angesteuert werden. In diesem Fall wird die Zeitdauer V2 durch den Widerstand R8 und den Kondensator C2 eingestellt. Es erweist sich jedoch als zweckmässig, die Zeitstufe Z2 durch ein von der Zeitstufe Z1 abgegebenes Signal anzusteuern. In diesem Fall ist die durch den Widerstand R8 und den Kondensator C2 einzustellende Zeitdauer gleich der Differenz aus der Zeitdauer V2 und der Zeitdauer V1. Die bekannten Zeitglieder enthalten an ihrem Ausgang einen als Schalter A1 bzw. A2 schematisch dargestellten Transistor. Gleichzeitig mit dem Auftreten des Signals S1 wird der Schalter A1 geschlossen und damit wird die Zeitstufe Z2 durch Anlegen der Bezugsspannung eingeschaltet. Nach der vorgegebenen Zeitdauer V2 wird der Schalter A2 geschlossen, der die Betriebsspannung UB kurzschliesst. Eine getrennte Schaltstufe SS ist damit bei der Verwendung dieser Zeitglieder nicht erforderlich, so dass die Zeitstufe Z2 gleichzeitig die Schaltstufe SS darstellt. Als Versorgungsspannung für die Zeitstufen Z1 und Z2 dient ebenfalls die Betriebsspannung UB. Die Zeitglieder Z1 und Z2 können auch in bekannter Weise ausschliesslich aus integrierten digitalen Schaltkreisen aufgebaut werden.

**Patentansprüche**

1. Schaltungsanordnung zur Überwachung einer Eingangsspannung (UE), bei der aus der Eingangsspannung (UE) eine in einem Energiespeicher (C) gepufferte Betriebsspannung (UB) für eine mindestens teilweise aus digitalen Schaltkreisen aufgebaute Steuerschaltung (S) erzeugt wird und bei der die Eingangsspannung (UE) einem Fühler (F) zugeführt wird, mit dem ein Zeitglied (Z1, Z2) verbunden ist und der ein Meldesignal (M) abgibt, wenn die Eingangsspannung (UE) kleiner ist als ein vorgegebener Schwellenwert (US), dadurch gekennzeichnet, dass das Zeitglied (Z1, Z2) durch eine erste Zeitstufe (Z1) und durch eine zweite Zeitstufe (Z2) gebildet ist, dass die erste Zeitstufe (Z1) auf die Aufnahme des Meldesignals (M) hin an die Steuerschaltung (S) ein Signal (S1) abgibt, welches in dieser einen Ruhezustand einstellt, bei dem besonders wenig Energie benötigt wird, wenn die Dauer des Meldesignals (M) grösser ist als eine vorgegebene erste Zeitdauer (V1), und den die Steuerschaltung (S1) nach Verschwinden des geannten einen Signals (S1) selbst wieder verlässt und die vor der Einstellung in den Ruhezustand begonnenen Funktionen fortsetzt, und dass die zweite Zeitstufe (Z2) die Betriebsspannung (UB) abschaltet, wenn die Dauer des Meldesignals (M) grösser ist als eine vorgegebene zweite, die erste Zeitdauer (V1) überschreitende Zeitdauer (V2).

2. Schaltungsanordnung nach Anspruch 1, dadurch gekennzeichnet, dass als Versorgungsspannung für den Fühler (F) die Eingangsspannung (UE) und als Versorgungsspannung der Zeitstufen (Z1, Z2) die Betriebsspannung (UB) verwendet wird.

3. Schaltungsanordnung nach Anspruch 1 oder Anspruch 2, dadurch gekennzeichnet, dass die zweite Zeitstufe (Z2) der ersten Zeitstufe (Z1) nachgeschaltet ist.

4. Schaltungsanordnung nach einem der Ansprüche 1 bis 3, dadurch gekennzeichnet, dass die zweite Zeitstufe (Z2) einen Schalter (A2) enthält, der die Betriebsspannung (UB) kurzschliesst.

5. Schaltungsanordnung nach Anspruch 3, dadurch gekennzeichnet, dass die erste Zeitstufe (Z1) einen Schalter (A1) enthält, der einen Pol der Betriebsspannung (UB) zur zweiten Zeitstufe (Z2) durchschaltet.

6. Schaltungsanordnung nach einem der Ansprüche 1 bis 5, dadurch gekennzeichnet, dass die Zeitstufen (Z1, Z2) integrierte, monostabile Kippstufen (ZG1, ZG2) enthalten.

7. Schaltungsanordnung nach einem der Ansprüche 1 bis 5, dadurch gekennzeichnet, dass die Zeitstufen (Z1, Z2) als digitale Schaltkreise ausgebildet sind.

8. Schaltungsanordnung nach Anspruch 1, dadurch gekennzeichnet, dass der Fühler (F) aus einem Zweiweggleichrichter (G2) und einer nachgeschalteten Schwellwertstufe (SW) gebildet ist, die das Meldesignal (M) erzeugt.

**Revendications**

1. Circuit pour surveiller une tension d'entrée (UE), dans lequel, à partir de la tension d'entrée (UE), on forme une tension de service (US), mémorisée dans un dispositif d'accumulation d'énergie (C), pour un circuit de commande (S) réalisé au moins partiellement à partir de circuits de commutation numériques et dans lequel la tension d'entrée (UE) est appliquée à un détecteur (F) auquel est relié un élement de temporisation (Z1, Z2) et qui délivre un signal d'avertissement (M) lorsque la tension d'entrée (UE) est plus faible qu'une valeur de seuil prédéterminée (US), caractérisé par le fait que l'élément de temporisation (Z1, Z2) est formé par un premier étage de temporisation (Z1) et par un second étage de temporisation (Z2), que lors de la réception du signal d'avertissement (M) le premier étage de temporisation (Z1) délivre au circuit de commande (S) un signal (S1) qui met celui-ci dans un état de repos, dans lequel une quantité d'énergie particulièrement faible est nécessaire, lorque la durée du signal d'avertissement (M) est plus importante que celle d'un premier intervalle de temps prédéterminé (V1), état que le circuit de commande (S) quitte de nouveau automatiquement après disparition dudit signal (S1) pour continuer à assurer les fonctions commencées avant la mise dans l'état de repos, et que le second étage de temporisation (Z2) supprime la tension de service (UB) lorsque la durée du signal d'avertissement (M) est plus importante qu'un second intervalle de temps prédéterminé (V2) qui est plus long que le premier intervalle de temps (V1).

2. Circuit suivant la revendication 1, caractérisé par le fait que la tension d'entrée (UE) est utilisée comme tension d'alimentation pour le détecteur (F), et que la tension de service (UB) est utilisée comme tension d'alimentation des étages de temporisation (Z1, Z2).

3. Circuit suivant la revendication 1 ou la revendication 2, caractérisé par le fait que le second étage de temporisation (Z2) est monté en aval du premier étage de commutation (Z1).

4. Circuit suivant l'une des revendications 1 à 3, caractérisé par le fait que le second étage de temporisation (Z2) comporte un commutateur (A2) qui court-circuite la tension de service (UB).

5. Circuit suivant l'une des revendications 1 à 4, caractérisé par le fait que le premier étage de temporisation (Z1) comporte un commutateur (A1) qui relie un pôle de la tension de service (UB) au second étage de temporisation (Z2).

6. Circuit suivant l'une des revendications 1 à 5, caractérisé par le fait que les étages de temporisation (Z1, Z2) contiennent des bascules monostables intégrées (ZG1, ZG2).

7. Circuit suivant l'une des revendications 1 à 5, caractérisé par le fait que les étages de temporisation (Z1, Z2) se présentent sous la forme de circuits de commutation numériques.

8. Circuit suivant l'une des revendications 1 à 7, caractérisé par le fait que le détecteur (F) est formé par un redresseur bidirectionnel (G2) et un circuit de valeur de seuil (SW) monté en aval, qui produit le signal d'avertissement (M).

### Claims

1. A circuit arrangement for monitoring an input voltage (UE), wherein an operating voltage (UB), which is buffered in an energy store (G), is produced from the input voltage (UE) for a control circuit (S) which is at least partly composed of digital switching circuits and wherein the input voltage (UE) is supplied to a sensor (F) to which a time element (Z1, Z2) is connected and which emits an alarm signal (M) if the input voltage (UE) is smaller than a predetermined threshold value (US), characterised in that the time element (Z1, Z2) is formed by a first time stage (Z1) and by a second time stage (Z2), that upon the pick-up of the alarm signal (M), the first time stage (Z1) emits a signal (S1) to the control circuit (S), which signal sets a rest position in the control circuit, in which rest position particularly little energy is required if the duration of the alarm signal (M) is greater than a predetermined first time duration (VI) and which rest position the control circuit (S1) itself leaves when said one signal (S1) has disappeared and continues the functions started before the setting into the rest position, and that the second time stage (Z2) switches off the operating voltage (UB) if the duration of the alarm signal (M) is greater than a predetermined second time duration (V2) which exceeds the first time duration (V1).

2. A circuit arrangement as claimed in claim 1, characterised in that the input voltage (UE) is used as a supply voltage for the sensor (F) and the operating voltage (UB) is used as a supply voltage for the time stages (Z1, Z2).

3. A circuit arrangement as claimed in claim 1 or claim 2, characterised in that the second time stage (Z2) is connected following the first time stage (Z1).

4. A circuit arrangement as claimed in one of claims 1 to 3, characterised in that the second time stage (Z2) comprises a switch (A2) which short-circuits the operating voltage (UB).

5. A circuit arrangement as claimed in one of claims 1 to 4, characterised in that the first time stage (Z1) comprises a switch (A1) which connects the operating voltage (UB) through to the second time stage (Z2).

6. A circuit arrangement as claimed in one of claims 1 to 5, characterised in that the time stages (Z1, Z2) comprise integrated, mono-stable trigger stages (ZG1, ZG2).

7. A circuit arrangement as claimed in one of claims 1 to 5, characterised in that the time stages (Z1, Z2) are designed as digital switching circuits.

8. A circuit arrangement as claimed in one of claims 1 to 7, characterised in that the sensor (F) is formed by a two-channel rectifier (G2) and a following threshold value stage (SW) which produces the alarm signal (M).

FIG 1

FIG 2

# FIG 3